Europäisches Patentamt

European Patent Office

Office européen des brevets

(19)

(11) **EP 1 122 867 A1**

(12) # DEMANDE DE BREVET EUROPEEN

(43) Date de publication:
**08.08.2001 Bulletin 2001/32**

(51) Int Cl.⁷: **H02K 24/00**, G01D 5/20,
**H02K 3/18**, H02K 3/52

(21) Numéro de dépôt: **01400258.8**

(22) Date de dépôt: **02.02.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **03.02.2000 FR 0001362**

(71) Demandeur: **PARVEX SA**
**21009 Dijon (FR)**

(72) Inventeur: **Maestre, Jean-François**
**2100 Dijon (FR)**

(74) Mandataire: **Prugneau, Philippe**
**Cabinet Prugneau - Schaub,**
**36, rue des Petits Champs**
**75002 Paris (FR)**

(54) **Résolveur multipolaire à couplage magnétique variable**

(57)     Le résolveur à couplage magnétique variable comprend un stator (S) constitué d'un premier et d'un second empilement de tôles coaxiaux (1, 2) entourant un rotor (R) et espacés l'un de l'autre suivant l'axe (4) de rotation du rotor. Le rotor est constitué d'un premier et d'un second empilement de tôles coaxiaux (9, 10) espacés l'un de l'autre suivant l'axe de rotation du rotor et alignés respectivement avec le premier et le second empilement de tôles du stator. Le premier et le second empilement de tôles (9,10) du rotor sont angulairement décalés l'un par rapport à l'autre et ont chacun une surface périphérique extérieure de couplage magnétique avec le stator qui définit au moins deux lobes (9A,10A) régulièrement espacés ce qui permet de produire un résolveur à faible coût et de très bonne précision.

FIG_1

## Description

L'invention concerne un résolveur à couplage magnétique variable, comprenant un stator constitué d'un premier et d'un second empilement de tôles coaxiaux entourant un rotor et espacés l'un de l'autre suivant l'axe de rotation du rotor; le rotor définissant un premier entrefer avec le premier empilement de tôles du stator et un second entrefer avec le second empilement de tôles du stator tels que le couplage magnétique du résolveur varie en fonction de la position angulaire du rotor.

Un tel résolveur est particulièrement adapté au fonctionnement en environnement sévère pour réaliser l'asservissement d'un servomoteur, ou encore pour réaliser l'asservissement d'un arbre de transmission d'une machine outil à commande numérique.

L'intérêt de ce type de résolveur est qu'il permet de convertir un signal d'entrée alternatif en des signaux de sortie alternatifs dont l'amplitude est modulée par la position angulaire du rotor. Ce type de résolveur comporte généralement un circuit d'excitation (signal d'entrée) et plusieurs circuits de réception (signaux de sortie). Si le signal d'entrée Ve est sinusoïdal et de la forme $Ve = V.sin(w.t)$, où V désigne l'amplitude du signal, w sa pulsation et t le temps, alors, pour le cas d'un résolveur qui fournit deux signaux de sortie, ces signaux de sortie Vs1 et Vs2 peuvent être modélisés par les expressions suivantes :

$$Vs1 = k.V.sin(w.t+d).sin(P)$$

$$Vs2 = k.V.sin(w.t+d).cos(P)$$

où k désigne un facteur d'amplification constant, d un déphasage constant, et P la position angulaire du rotor.

L'analyse de ces signaux par un démodulateur permet de connaître la position angulaire P que l'on recherche.

Un tel résolveur est décrit dans la demande de brevet européen EP174290. Ce résolveur connu est principalement composé d'un stator muni d'une bobine excitatrice et de bobines réceptrices, et d'un rotor dont la forme particulière permet de réaliser un couplage magnétique avec le stator qui est caractéristique de la position angulaire dudit rotor. Plus particulièrement, le stator de ce résolveur comporte deux empilements de tôles identiques espacés suivant l'axe de rotation du rotor et entre lesquelles est disposée une bobine excitatrice enroulée autour de l'axe de rotation du rotor. Le stator est encore muni de bobines réceptrices enroulées autour de protubérances formées sur la surface intérieure des empilements de tôles du stator. Le rotor de ce résolveur est constitué d'un empilement de tôles qui s'étend de façon oblique par rapport à l'axe de rotation du rotor et qui est solidaire d'un noyau en acier ferromagnétique de sorte que vu en coupe suivant un plan contenant l'axe de rotation et la ligne de plus grande pente de cet empilement de tôles par rapport à l'axe de rotation, il a une section en forme de parallélogramme présentant une extrémité qui est proche d'un empilement de tôles du stator et une autre extrémité qui est proche de l'autre empilement de tôles du stator. Avec cette construction , le champ magnétique alternatif induit par la bobine excitatrice est canalisé par le rotor et est caractéristique de la position angulaire de celui-ci.

Un tel résolveur n'est pas multipolaire, ce qui lui confère une précision médiocre. D'autre part, la forme atypique du rotor (empilement de tôles positionné de façon oblique par rapport à l'axe de rotation rotor) participe à augmenter son coût de fabrication. Enfin, la complexité des bobinages réalisés sur la surface intérieure du stator augmente le coût de fabrication du résolveur et rend difficile une construction de petite taille.

Le but de l'invention est de remédier à ces inconvénients.

A cet effet, l'invention a pour objet un résolveur à couplage magnétique variable, comprenant un stator constitué d'un premier et d'un second empilement de tôles coaxiaux entourant un rotor et espacés l'un de l'autre suivant l'axe de rotation du rotor, le rotor définissant un premier entrefer avec le premier empilement de tôles du stator et un second entrefer avec le second empilement de tôles du stator tels que le couplage magnétique du résolveur varie en fonction de la position angulaire du rotor, caractérisé en ce que le rotor est constitué d'un premier et d'un second empilement de tôles coaxiaux et espacés l'un de l'autre suivant l'axe de rotation du rotor et montés sur un noyau en acier ferromagnétique, lesdits premier et second empilements de tôles du rotor étant perpendiculaires audit axe de rotation de telle sorte qu'ils sont alignés respectivement avec lesdits premier et second empilements de tôles du stator, lesdits premier et second empilement de tôles du rotor étant décalés angulairement l'un par rapport à l'autre et ayant chacun une surface périphérique extérieure de couplage magnétique avec le stator définissant au moins deux lobes régulièrement espacés.

Dans le résolveur selon l'invention, le rotor est constitué de deux empilements de tôles disposés dans des plans normaux à l'axe de rotation, ce qui permet d'en réduire le coût de fabrication et d'en augmenter la précision. En effet, il devient possible de réaliser un rotor multipolaire (plus précis) tout en ayant recours à un mode classique de fabrication du rotor (empilements de tôles prédécoupées suivant un plan normal à l'axe de rotation).

D'autre part, les résolveurs à couplage magnétique variable posent souvent des problèmes d'harmoniques de champ magnétique : les signaux de sortie comportent des harmoniques de rang impair, si bien que les signaux de sortie n'ont pas une forme suffisamment proche de la sinusoïde pour donner lieu à la précision souhaitée. Une technique usuelle pour remédier à ce problème consiste à augmenter le nombre de bobines réceptrices et à leur attribuer des nombres de spires différents, calculés suivant une méthode classique : ainsi, pour un résolveur bipolaire dont on porte le nombre de bobines réceptrices à 16, (et comportant chacune le nombre de spires adéquat) on constate que les facteurs d'amplification des harmoniques des rangs 2 à 14 sont très proches de zéro. Si l'on fait le calcul des nombres de spires pour un résolveur bipolaire comportant 4 bobines réceptrices, on s'aperçoit que l'on ne peut pas obtenir d'atténuation des harmoniques. La réalisation selon l'invention, d'un rotor comportant des lobes en forme de pétale permet de remédier à cet inconvénient. En effet, ce profil particulier des lobes permet d'obtenir un résolveur qui atténue significativement les harmoniques de rang 3 et 5, tout en conservant un nombre minimal de bobines réceptrices qui ont toutes le même nombre de spires.

De manière à optimiser encore la précision de ce résolveur, on s'est aperçu qu'il est important d'isoler le champ magnétique que produit le résolveur des perturbations que peut provoquer son environnement. En effet, la présence d'une pièce métallique massive à proximité du résolveur a tendance à modifier sensiblement les lignes du champ magnétique que produit le résolveur, ce qui a tendance à dégrader sa précision. Une manière de procéder consiste à appliquer de part et d'autre du stator des plaques de cuivre dont la découpe est identique à celle des tôles qui constituent les empilements stator, et qui jouent le rôle d'isolant électromagnétique. La même technique est appliquée aux paquets de tôle du rotor.

Un autre avantage du dispositif selon l'invention est le mode de fabrication des bobines réceptrices, qui consiste à enrouler les bobinages sur des supports d'enroulements et à emboîter ensuite ces supports sur des dents du stator. Ce mode de fabrication permet une fabrication en grande série de ces bobines et contribue à simplifier tant les opérations de montage que de maintenance du résolveur.

Un exemple de réalisation du résolveur selon l'invention est décrit plus en détail ci-après et illustré sur les dessins annexés.

La figure 1 montre schématiquement les principaux éléments du résolveur suivant l'invention, dans le cas particulier d'un résolveur comportant 10 pôles.

La figure 2 est une représentation des lignes de champ magnétique, vues dans un plan contenant l'axe de rotation ainsi que la disposition des tôles de cuivre.

La figure 3 donne les courbes enveloppe des signaux de sortie dans le cas d'un rotor à 8 pôles à profil classique

La figure 4 donne les courbes enveloppe des signaux de sortie dans le cas d'un rotor à 8 pôles à profil courbe.

La figure 5 montre à titre indicatif un profil de lobes classiques (non optimisé) pour le cas d'un résolveur à 10 pôles

La Figure 6 montre à titre indicatif un profil de lobes en forme de pétales qui permet d'atténuer les harmoniques de rang 3 et 5 dans le cas d'un résolveur à 10 pôles.

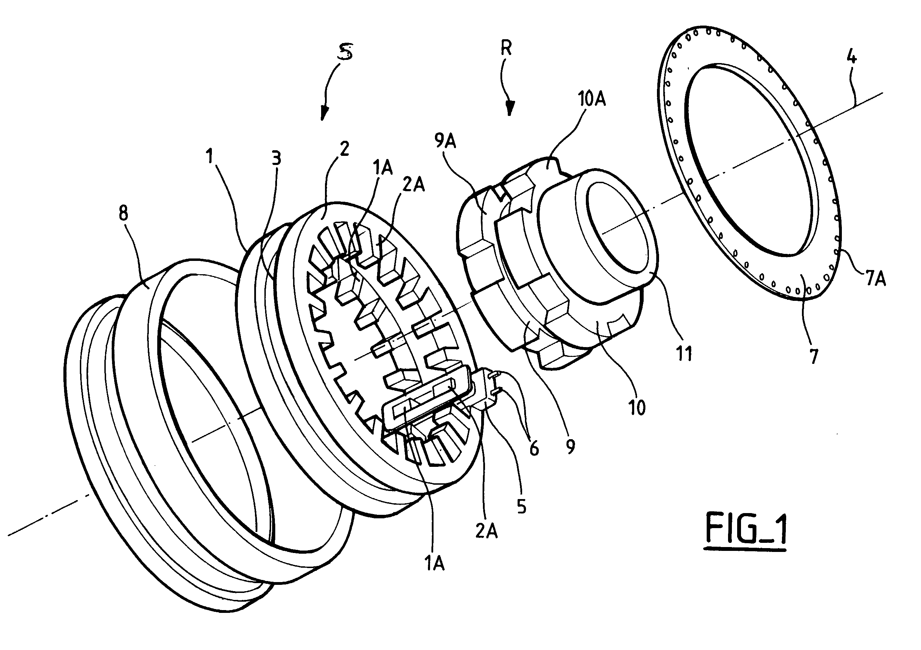

La figure 1 qui est une vue en éclaté du résolveur suivant l'invention, permet de voir les principaux éléments que comportent le stator et le rotor.

Le stator S comporte un premier empilement de tôles 1 et un second empilement de tôles 2 entourant le rotor R et disposés de façon coaxiale à l'axe 4 de rotation du rotor. Une bobine excitatrice 3, bobinée autour de l'axe de rotation 4 du rotor R, est disposée entre les deux empilements de tôles 1 et 2 du stator.

Comme visible sur la figure 1, chaque empilement de tôles 1,2 du stator a une surface intérieure de couplage magnétique avec le rotor qui définit des dents 1A,2A s'étendant radialement vers l'axe de rotation 4. Les deux empilements de tôles 1,2 du stator sont alignés angulairement suivant l'axe 4. Ainsi comme visible sur la figure 1, on voit qu'une dent 1A de l'empilement de tôles 1 est alignée suivant la direction axiale 4 avec une dent correspondante 2A de l'empilement de tôles 2. Les bobines réceptrices du stator (non illustrées) sont enroulées chacune sur un support d'enroulement 5 de forme générale torique (un seul étant représenté sur la figure 1 de façon à faciliter la compréhension) qui est emboîté de façon amovible sur une paire de dents formée par deux dents adjacentes 1A,2A du premier et du secont empilement de tôles 1,2 du stator. Cette construction permet de monter les bobines réceptrices très facilement sur le stator ou encore de les remplacer au cours d'une opération de maintenance du résolveur. Chaque support d'enroulement 5 peut être réalisé en matière plastique à faible coût et les bobines d'excitation peuvent être produites préalablement en grandes séries à l'aide d'une machine de bobinage spécialisée. Chaque support 5 est muni de deux plots 6 de connexion électrique raccordés au fil de la bobine et destinés à être connectés directement par embrochage à un circuit imprimé 7 en forme de couronne qui réalise l'interconnexion des bobines réceptrices du stator. On comprendra que ce circuit imprimé 7 muni de trous de contact électrique 7A à sa périphérie dans lesquels viennent s'engager les plots 6, vient se positionner de façon coaxiale à l'axe 4 sur l'une des deux faces latérales du stator comme illustré sur la figure 1.

Le stator comprend encore une carcasse torique 8, en acier magnétique, entourant les empilements de tôles 1,2 et servant à canaliser les lignes de champ du champ magnétique qui est généré par la bobine excitatrice.

Le rotor R est constitué de deux empilements de tôles 9 et 10 solidaires d'un noyau tubulaire en acier ferromagnétique 11 qui canalise les lignes de champ entre les deux empilements de tôles 9 et 10. Les empilements de tôles 9 et 10 du rotor sont coaxiaux et espacés l'un de l'autre suivant l'axe 4 et sont alignés respectivement avec les empilement de tôles 1 et 2 du stator.

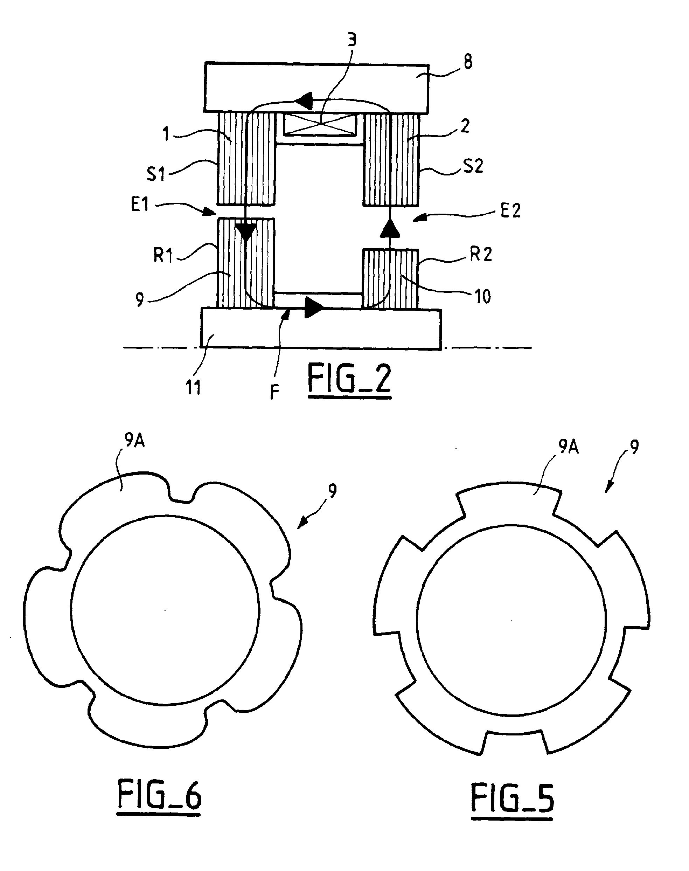

Les empilements de tôles 9,10 du rotor ont chacun une surface périphérique extérieure de couplage magnétique avec le stator qui définit des lobes 9A, 10A régulièrement espacés et sont angulairement décalés l'un par rapport à l'autre. Ce décalage angulaire entre les deux empilements de tôles 9,10 permet d'avoir un entrefer qui, considéré dans un même plan comprenant l'axe de rotation, est faible sous le premier empilement de tôles stator et élevé sous le second empilement de tôles stator, comme représenté sur la figure 2.

On a représenté sur la figure 2 les lignes de champ vues en coupe suivant un plan contenant l'axe de rotation 4. L'entrefer E1 qui est situé entre le premier empilement de tôles stator 1 et le premier empilement de tôles rotor 9 est significativement plus faible que l'entrefer E2 qui est situé entre le second empilement de tôles stator 2 et le second empilement de tôles rotor 10. Le flux magnétique qui traverse la bobine réceptrice suivant le chemin F a donc une amplitude qui varie d'un minimum sous l'entrefer E1 à un maximum sous l'entrefer E2. La bobine réceptrice qui embrasse le flux des deux entrefers réalise la somme de ces deux flux et grâce au décalage angulaire des deux empilements de tôles du rotor, le flux total dans cette bobine présente des sommets alternativement positifs et négatifs. Sous la bobine réceptrice suivante, la configuration est inverse, (E1 y est élevé et E2 faible) si bien que le signal obtenu dans cette bobine est en opposition de phase par rapport à celui obtenu dans la précédente.

Cette figure donne encore la position des tôles de cuivre S1, S2, R1 et R2 qui permettent d'isoler électromagnétiquement le champ magnétique que produit le résolveur des perturbations extérieures. Les tôles S1 et S2 sont des tôles en cuivre qui ont la même découpe que les tôles constituant les empilements stator, et qui sont intégrées à ces empilements. Comme illustré sur la figure 2, la tôle S1 est la première tôle du premier paquet stator, selon l'axe de rotation, et la tôle S2 est la dernière tôle du second paquet stator selon l'axe de rotation. De même, les tôles R1 et R2 sont respectivement la première tôle du premier empilement de tôles du rotor et la dernière tôle du deuxième empilement de tôles du rotor. Au même titre que pour le stator, les tôles R1 et R2 ont la même découpe que les tôles qui constituent les empilement de tôles du rotor. Cet agencement des tôles de cuivre constitue approximativement deux plans qui isolent le résolveur des perturbations électromagnétiques dues à son environnement, ces deux plans étant donc normaux à l'axe de rotation et situés au niveau des deux faces externes et planes du résolveur.

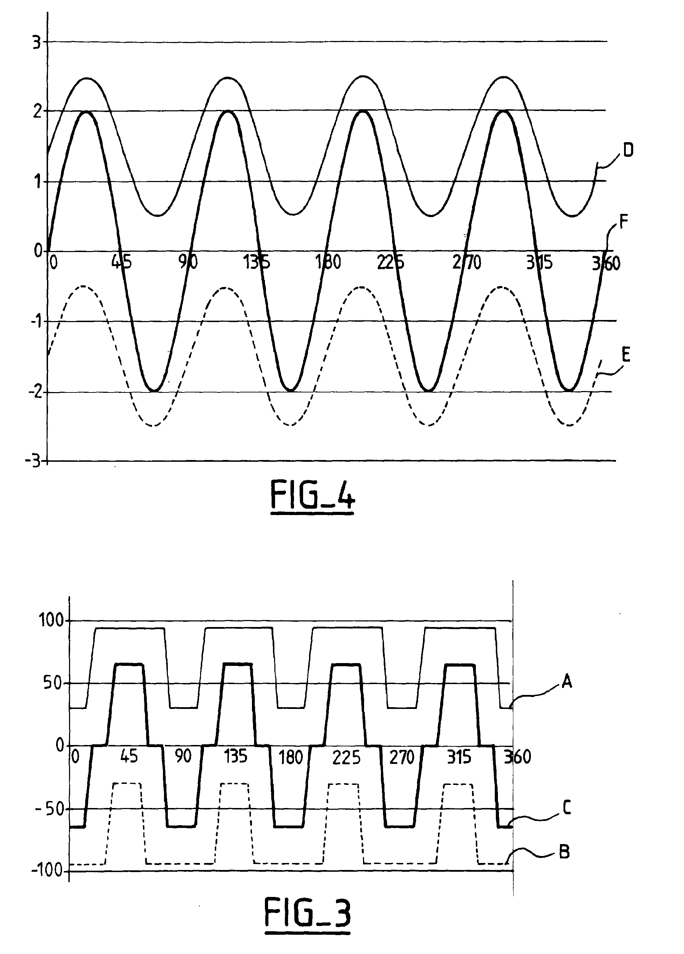

La figure 3 donne les courbes enveloppe du flux pour un rotor à lobes classiques (non optimisés). Les courbes A et B donnent cette enveloppe pour des mesures effectuées respectivement sous le premier empilement de tôles stator et sous le second empilement de tôles. La courbe C donne le flux magnétique qui est embrassé par les bobines réceptrices (qui entourent une dent de chaque empilement de tôle stator). Ces courbes permettent de se rendre compte de l'influence des harmoniques de rang 3 et 4 : en effet, l'enveloppe du signal de sortie obtenu comporte des zones (segments horizontaux) sur lesquelles il est impossible de se repérer correctement, si bien que la précision de mesure ne peut être considérée comme satisfaisante.

La figure 4 donne respectivement les mêmes courbes D, E , F, dans le cas d'un rotor à lobes de rotor ayant chacun une forme de pétale essentiellement courbe. De tels lobes permettent d'atténuer les principales harmoniques de flux, de façon à obtenir des signaux de sortie de forme sinusoïdale, qui peuvent être exploités par un démodulateur. En effet, comme on peut le constater sur ces courbes, la forme est suffisamment sinusoïdale pour permettre une précision de lecture satisfaisante sur toutes les positions angulaires du rotor.

La figure 5 donne une forme de lobes 9A du premier empilement de tôles rotor telle qu'on la connaît classiquement. Cette forme donne lieu aux signaux de sortie suivant les courbes de la figure 3, c'est à dire pour lesquels les harmoniques de rang 3 et 5 n'ont pas été atténuées.

La figure 6 donne à titre indicatif un profil de lobes 9A du premier empilement de tôles rotor, en forme de pétale essentiellement courbe, qui permet d'atténuer les harmoniques et d'obtenir les signaux de sortie tels que représentés dans la figure 4. Le calcul d'un tel profil peut être réalisé de manière approchée par un méthode analytique en écrivant par exemple que la perméance du circuit magnétique varie de façon sinusoïdale, ou encore en procédant par étapes successives à l'aide d'un logiciel de calcul par éléments finis qui permettra de converger vers une forme qui atténue les harmoniques de rang 3 et 5. Il est entendu que l'empilement de tôles 10 du rotor a des lobes 10A identiques à ceux 9A de l'empilement de tôles 9.

Une façon d'améliorer le résolveur, c'est d'augmenter le nombre de pôles, ce qui augmentera d'autant sa précision. Ainsi, si l'on souhaite réaliser un résolveur comportant deux signaux de sortie, il faudra que le nombre de bobines réceptrices soit le double du nombre de pôles.

De façon à améliorer encore la précision du résolveur obtenu, on peut jouer sur le décalage angulaire des deux empilements de tôles du rotor. Si l'on définit l'angle polaire comme étant l'angle qui sépare deux lobes successifs sur un empilement de tôles rotor, on peut décaler les deux empilements de tôles que comporte le rotor d'une valeur angulaire correspondant à un demi angle polaire, ce qui constitue une configuration basique du résolveur suivant l'invention. Mais, il est possible, en décalant les deux empilements de tôles du rotor d'un angle légèrement différent, d'améliorer encore la précision et d'atténuer plus fortement les harmoniques de rang 3 et 5. On obtiendra des résultats probants en décalant les deux empilements de tôles du rotor par exemple de 2/3 ou 3/4 de l'angle polaire.

## Revendications

1. Un résolveur à couplage magnétique variable, comprenant un stator (S) constitué d'un premier et d'un second empilement de tôles coaxiaux (1, 2) entourant un rotor (R) et espacés l'un de l'autre suivant l'axe de rotation (4) du rotor, le rotor définissant un premier entrefer (E1) avec le premier empilement de tôles du stator et un second entrefer (E2) avec le second empilement de tôles du stator tels que le couplage magnétique du résolveur varie en fonction de la position angulaire du rotor, caractérisé en ce que le rotor est constitué d'un premier (9) et d'un second (10) empilement de tôles coaxiaux et espacés l'un de l'autre suivant l'axe de rotation du rotor et montés sur un noyau en acier ferromagnétique (11), lesdits premier et second empilements de tôles (9,10) du rotor étant perpendiculaires audit axe de rotation (4) de telle sorte qu'ils sont alignés respectivement avec lesdits premier et second empilements de tôles (1,2) du stator, lesdits premier (9) et second (10) empilements de tôles du rotor étant décalés angulairement l'un par rapport à l'autre et ayant chacun une surface périphérique extérieure de couplage magnétique avec le stator définissant au moins deux lobes (9A,10A) régulièrement espacés.

2. Le résolveur selon la revendication 1, comprenant une bobine excitatrice (3), bobinée selon l'axe de rotation (4) du rotor (R), et disposée entre les deux empilements de tôles (1) et (2) du stator.

3. Le résolveur selon la revendication 1 ou 2, dans lequel les lobes (9A,10A) du rotor ont une forme de pétale essentiellement courbe.

4. Le résolveur selon la revendication 1, 2 ou 3, dans lequel chaque empilement de tôles (1, 2) du stator a une surface intérieure de couplage magnétique avec le rotor qui définit des dents (1A, 2A) s'étendant radialement vers l'axe de rotation du rotor et dans lequel des supports amovibles (5) de bobines réceptrices du stator sont emboîtés respectivement sur des paires de dents formées chacune par deux dents adjacentes du premier et du secont empilement de tôles du stator.

5. Le résolveur selon la revendication 4, dans lequel chaque support amovible (5) est muni de deux plots (6) de connexion électrique destinés à être connectés à un circuit imprimé (7) réalisant l'interconnexion des bobines réceptrices du stator.

6. Le résolveur selon l'une des revendications 1 à 5, dans lequel les empilements de tôles (9,10) du rotor sont décalés angulairement l'un par rapport à l'autre d'un angle correspondant à 2/3 ou 3/4 de l'angle qui sépare deux lobes successifs d'un même empilement de tôles rotor.

7. Le résolveur selon l'une des revendications 1 à 6, dans lequel la première tôle (S1) suivant l'axe de rotation du rotor du premier empilement de tôles stator (1) et la dernière tôle (S2) suivant l'axe de rotation du rotor du deuxième empilement de tôles stator (2), sont des tôles de cuivre.

8. Le résolveur selon l'une des revendications 1 à 7, dans lequel la première tôle (R1) suivant l'axe de rotation du rotor du premier empilement de tôles rotor (9) et la dernière tôle (R2) suivant l'axe de rotation du rotor du deuxième empilement de tôles rotor (10), sont des tôles de cuivre.

FIG_1

EP 1 122 867 A1

FIG_2

FIG_6

FIG_5

FIG_4

FIG_3

**Office européen des brevets**

## RAPPORT DE RECHERCHE EUROPEENNE

Numéro de la demande

EP 01 40 0258

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 5 323 109 A (MEHNERT WALTER ET AL) 21 juin 1994 (1994-06-21) * colonne 18, ligne 61 – colonne 22, ligne 47; figures 5-7 * --- | 1-8 | H02K24/00 G01D5/20 H02K3/18 H02K3/52 |
| Y | FR 1 235 249 A (MÖLLER, W.) 26 octobre 1960 (1960-10-26) * page 1, colonne de droite, ligne 4 – page 2, colonne de gauche, ligne 13; figure 1 * --- | 1-8 | |
| A | GB 729 764 A (NRDC) 11 mai 1955 (1955-05-11) * page 1, ligne 82 – page 2, ligne 118; figures 1-4 * --- | 1 | |
| A | US 5 446 966 A (ISHIZAKI AKIRA) 5 septembre 1995 (1995-09-05) * colonne 7, ligne 41 – colonne 8, ligne 9; figure 4 * --- | 3 | |
| A | US 5 300 884 A (MAESTRE JEAN-FRANCOIS) 5 avril 1994 (1994-04-05) * colonne 4, ligne 39 – ligne 54; figures 5-7 * ----- | 4,5 | **DOMAINES TECHNIQUES RECHERCHES (Int.Cl.7)** H02K G01D |

Le présent rapport a été établi pour toutes les revendications

| Lieu de la recherche | Date d'achèvement de la recherche | Examinateur |
|---|---|---|
| LA HAYE | 11 juin 2001 | Davis, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 40 0258

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-06-2001

| Document brevet cité au rapport de recherche | | Date de publication | Membre(s) de la famille de brevet(s) | | Date de publication |
|---|---|---|---|---|---|
| US 5323109 | A | 21-06-1994 | DE | 4113745 A | 29-10-1992 |
| | | | AT | 146275 T | 15-12-1996 |
| | | | CA | 2067076 A | 27-10-1992 |
| | | | DE | 59207646 D | 23-01-1997 |
| | | | EP | 0510367 A | 28-10-1992 |
| | | | EP | 0664441 A | 26-07-1995 |
| | | | ES | 2098386 T | 01-05-1997 |
| | | | JP | 6207833 A | 26-07-1994 |
| FR 1235249 | A | 26-10-1960 | AUCUN | | |
| GB 729764 | A | 11-05-1955 | AUCUN | | |
| US 5446966 | A | 05-09-1995 | JP | 2698013 B | 19-01-1998 |
| | | | JP | 6213614 A | 05-08-1994 |
| US 5300884 | A | 05-04-1994 | FR | 2679026 A | 15-01-1993 |
| | | | AT | 127929 T | 15-09-1995 |
| | | | DE | 69204771 D | 19-10-1995 |
| | | | DE | 69204771 T | 22-02-1996 |
| | | | EP | 0522941 A | 13-01-1993 |
| | | | ES | 2076709 T | 01-11-1995 |
| | | | NO | 922704 A | 12-01-1993 |

EPO FORM P0460

Pour tout renseignement concernant cette annexe : voir Journal Officiel de l'Office européen des brevets, No. 12/82